# FASCICULE DE BREVET EUROPEEN

(11) **EP 2 919 943 B1**
(45) Date de publication et mention de la délivrance du brevet: **23.10.2019**
(21) Numéro de dépôt: 13799111.3
(22) Date de dépôt: 13.11.2013
(51) Int. Cl.: B23Q 11/10, B23B 31/02

(54) **SYSTEME D'ETANCHEITE POUR PORTE-OUTIL**
DICHTUNGSSYSTEM FÜR WERKZEUGHALTER
SEALING SYSTEM FOR TOOL HOLDER

(30) Priorité: 13.11.2012 FR 1260796
(43) Date de publication de la demande: 23.09.2015
(73) Titulaire: Mitis, 44340 Bouguenais (FR)
(72) Inventeur: LAPORTE, Sylvain, 44300 Nantes (FR)
(74) Mandataire: Nony
(86) Numéro de dépôt international: PCT/IB2013/060101
(87) Numéro de publication internationale: WO 2014/076641

(56) Documents cités:
- EP-A1- 1 541 279
- EP-A2- 0 629 462
- GB-A- 1 366 638

## Description

La présente invention concerne l'usinage assisté par un fluide et plus particulièrement un système selon le préambule de la revendication 1.

Un tel système est connu du document EP 0 629 462 A2.

Dans les procédés d'usinage faisant intervenir des outils tournants, tels que des procédés de fraisage ou d'usinage axial, notamment de perçage ou de fraisurage, il est souvent utile de pouvoir amener un fluide tel qu'un lubrifiant, notamment une huile entière, une huile soluble, un mélange eau/huile ou un gaz à la pointe de l'outil.

Certaines machines d'usinage sont équipées de joints tournants intégrés à la broche, permettant de remplir cette fonction.

Dans le cas contraire, il faut mettre en œuvre un système d'étanchéité au niveau du porte-outil. Celui-ci doit alors assurer à la fois d'une part la fonction d'amenée du fluide dans un collecteur communiquant avec un ou plusieurs canaux internes de l'outil permettant de le véhiculer jusqu'à son extrémité, au niveau de la zone de coupe en particulier, et d'autre part la fonction de guidage et de transmission du couple nécessaire à la mise en rotation de l'outil.

Des joints sont utilisés et viennent en contact avec le collecteur pour assurer l'étanchéité de la circulation du fluide depuis une arrivée de fluide.

Le dimensionnement du porte-outil pour la transmission du couple oblige à utiliser un collecteur de diamètre relativement important et les joints assurant l'étanchéité viennent en contact avec une surface de glissement, définie par le collecteur, qui est d'un diamètre relativement grand.

La vitesse périphérique de glissement des joints est donc élevée et la conséquence directe en est une limitation de la fréquence maximale de rotation de l'outil, ce qui interdit certains domaines de fonctionnement. Cette limite est habituellement aux alentours de 5 000 tours par minute, et d'autant plus problématique que le perçage est de petit diamètre, car la fréquence de rotation est inversement proportionnelle au diamètre de l'outil.

US 7 147 410 divulgue un porte-outil dans lequel l'outil est engagé dans une bague de serrage sur laquelle s'appuient deux joints pour définir un espace dans lequel circule un fluide de refroidissement jusqu'à l'outil.

Il existe un besoin pour perfectionner encore les procédés d'usinage et les porte-outils de machines d'usinage utilisant un fluide de coupe, afin notamment de permettre d'entraîner l'outil en rotation à une fréquence de rotation élevée.

L'invention répond à ce besoin grâce à un système d'étanchéité selon la revendication 1 pour porte-outil de machine d'usinage assisté par un fluide de coupe, comportant :
- au moins un premier et un deuxième joint contribuant à délimiter un espace de circulation du fluide vers au moins un canal interne de l'outil, l'un des joints s'appliquant sur l'outil ou un adaptateur éventuel portant l'outil et l'autre joint s'appliquant sur une surface définie par une paroi du porte-outil espacée de l'outil et tournant avec celui-ci,
avec 0,3 ≤ Do/Djₘₐₓ pour Do dans l'intervalle [1 ; 3] en mm et 0,5 ≤ Do/Djₘₐₓ pour Do dans l'intervalle [3 ; 20] en mm, où Do est le diamètre de l'outil en regard de cet autre joint et Djₘₐₓ le diamètre de la surface de glissement de ce joint, qui est aussi le plus grand diamètre interne des deux joints.

Grâce à l'invention, il est possible d'équiper des machines d'usinage assisté par un fluide de coupe, non pourvues de joint tournant, avec un porte-outil d'encombrement réduit et permettant d'étendre les plages et domaines d'utilisation par rapport aux solutions connues. La longueur additionnelle est par exemple limitée, par rapport à un porte-outil classique, à 15 mm environ, l'encombrement dans la dimension radiale pouvant ne pas être augmenté.

L'invention trouve à s'appliquer aussi bien aux procédés de perçage vibratoire qu'aux procédés de perçage conventionnel et convient tout particulièrement aux parcs de machines outils non équipées de joints tournants et travaillant sur un nombre limité de diamètres de perçage, ce qui implique peu ou pas de changement de porte-outils.

L'étanchéité peut se faire grâce à l'invention sur des surfaces de glissement dont le diamètre est proche de celui de l'outil, voire sur l'outil lui-même, ce qui permet de diminuer la vitesse de glissement et d'autoriser une fréquence de rotation plus élevée.

Les deux joints s'appliquent sur l'outil ou sur l'adaptateur selon une variante a), qui est préférée mais peut obliger à utiliser des outils spécifiques et qui ne correspond pas à l'invention. L'un des joints s'applique sur l'outil et l'autre sur une surface du porte-outil, selon la deuxième variante b), qui correspond à l'invention et qui est plus facile à mettre en œuvre sur la majorité des outils existant sur le marché.

La surface sur laquelle s'applique le deuxième joint dans la variante b) est définie par une paroi du porte-outil, laquelle est de préférence définie par une bague adaptatrice, qui de préférence peut venir au contact d'un moyen de serrage de l'outil, notamment une pince expansible. La bague adaptatrice peut être au moins partiellement engagée à l'intérieur d'un écrou de serrage de la pince. Ladite paroi est en contact d'un côté avec la surface de glissement du joint et du côté opposé s'étend à distance de l'outil pour permettre la circulation du fluide entre l'outil et le porte-outil jusqu'audit canal interne de l'outil. Cette paroi est de préférence la plus mince possible et la plus rapprochée possible de l'outil. Lors d'un changement d'outil, la bague adaptatrice peut être remplacée par une autre, adaptée au nouveau diamètre d'outil.

En variante, la surface sur laquelle s'applique le deuxième joint dans la variante b) est définie par un manchon adaptateur qui vient s'emmancher autour de l'outil et vient au contact de la pince expansible. Le manchon adaptateur est, de préférence, déformable. Lors du serrage de la pince, le manchon adaptateur peut se déformer de préférence élastiquement, et venir au contact de l'outil pour le serrer en lui transmettant le couple de la pince et le maintenir en place et centré. Lors du desserrage de la pince, le manchon adaptateur reprend, de préférence, sa forme et libère l'outil.

De préférence, le manchon adaptateur présente au moins une rainure longitudinale, mieux une pluralité de rainures longitudinales s'étendant sur sa surface interne et sur toute sa longueur. La ou les rainures longitudinales permettent la circulation du fluide de coupe vers le canal interne de l'outil et facilitant la déformation élastique du manchon sous la contrainte de la pince.

Le manchon adaptateur peut comporter au moins 3 rainures longitudinales, en fonction notamment du diamètre de l'outil. Plus le diamètre externe de l'outil est grand, plus le nombre de rainures peut être important et plus le fluide de coupe circule.

Lors du changement d'outil, le manchon adaptateur peut être remplacé par un autre, adapté au nouveau diamètre d'outil.

Le manchon adaptateur peut comporter une gorge annulaire destinée à recevoir un anneau élastique (Circlips) disposé entre la pince et une bague porte-joints. L'anneau élastique permet de bloquer le manchon adaptateur axialement en position et de limiter sa profondeur d'enfoncement dans le porte-outil. L'étanchéité de l'extrémité interne du manchon peut être assurée par un joint disposé entre un bouchon d'extrémité et la surface intérieure du manchon. Le joint peut être un joint torique logé dans une gorge annulaire du manchon.

Le bouchon d'extrémité peut être mis en place en le faisant coulisser dans le manchon adaptateur depuis l'extrémité opposée du joint et il est maintenu contre le joint par la pression du fluide de coupe dans le manchon adaptateur pour assurer l'étanchéité de la fermeture du manchon adaptateur.

Le bouchon d'extrémité peut comporter une gorge annulaire de forme sensiblement en section en quart de cercle, notamment d'étendue angulaire autour du centre de la section de légèrement plus de 90°, de préférence entre 90° et 120°, pour recevoir le joint torique.

La pression de fluide dans le manchon adaptateur est, de préférence, comprise entre 1 bar et 10 bar, mieux entre 1 bar et 7 bar.

Les joints sont avantageusement portés par la bague du porte-joints du système d'étanchéité, adaptée au diamètre de l'outil ou de l'adaptateur portant l'outil, disposée au contact d'un stator servant au raccordement d'une arrivée en fluide, en liaison pivot avec l'écrou de serrage par le biais d'un roulement. Lors du changement d'outil et du passage d'un outil d'un premier diamètre à un outil d'un autre diamètre, cette bague porte-joints peut être remplacée par une nouvelle bague adaptée au nouveau diamètre de l'outil.

Le système d'étanchéité peut être proposé avec des composants qui sont les mêmes pour tous les diamètres d'outil, notamment l'écrou de serrage de la pince et certains éléments du stator, et d'autres qui sont changés en fonction du diamètre d'outil, notamment la bague porte-joints, les joints, la bague adaptatrice ou le manchon adaptateur, voire la pince (si l'utilisateur n'en dispose pas déjà).

Tous les composants qui sont changés en fonction du diamètre d'outil peuvent ainsi définir des gammes de bagues adaptatrices ou de manchons adaptateurs, de bagues porte-joints et de joints adaptés à différents diamètres d'outil, qui sont proposés à l'utilisateur avec les autres composants du système d'étanchéité, qui eux peuvent être invariants.

L'invention a encore pour objet, selon un autre de ses aspects, une gamme de systèmes d'étanchéité ou de composants d'un système d'étanchéité, adaptés à des outils respectifs de diamètres différents, dont un outil ou adaptateur de diamètre D1 et un outil ou adaptateur de diamètre D2, supérieur à D1.

L'invention a ainsi encore pour objet une gamme d'au moins un premier et un deuxième système d'étanchéité ou un ensemble d'au moins un premier système d'étanchéité et d'une gamme de composants permettant de modifier ce premier système d'étanchéité pour former un deuxième système d'étanchéité en reprenant des composants du premier système d'étanchéité, les deux systèmes d'étanchéité étant destinés à un même porte-outil de machine d'usinage assisté par un fluide de coupe, adaptés à des diamètres d'outils ou d'adaptateurs différents D1 et D2, avec D2 supérieur à D1, chaque système d'étanchéité comportant au moins un premier joint d'étanchéité contribuant à délimiter un espace de circulation du fluide vers au moins un canal interne de l'outil, le joint s'interposant entre des surfaces animées d'un mouvement de rotation relatif, lors de la rotation de l'outil, le diamètre intérieur du premier joint du premier système d'étanchéité étant destiné à coopérer avec l'outil ou l'adaptateur de diamètre D1 et le diamètre intérieur du premier joint du deuxième système d'étanchéité étant destiné à coopérer avec l'outil ou l'adaptateur de diamètre D2.

Chaque système d'étanchéité comporte également un deuxième joint d'étanchéité contribuant également à délimiter l'espace de circulation du fluide, le deuxième joint du premier système d'étanchéité étant destiné à coopérer avec l'outil ou l'adaptateur de diamètre D1, le deuxième joint du premier système d'étanchéité étant de diamètre intérieur inférieur au diamètre intérieur du deuxième joint du deuxième système d'étanchéité, destiné à coopérer avec l'outil ou l'adaptateur de diamètre D2.

On peut ainsi proposer à l'utilisateur, dans un même conditionnement, deux systèmes d'étanchéité adaptés à des diamètres d'outils différents, ou mieux un premier système d'étanchéité et les composants permettant de modifier ce premier système d'étanchéité en reprenant certains de ses composants et en les complétant avec des composants spécifiques aux autres diamètres d'outils ou d'adaptateurs.

Le conditionnement peut ainsi contenir le stator du système d'étanchéité et l'écrou de serrage, et des gammes de joints, de bagues porte-joints et de bagues adaptatrices ou de manchons adaptateurs adaptés aux différents diamètres d'outils.

L'invention a encore pour objet une gamme d'au moins un premier et un deuxième système d'étanchéité ou un ensemble d'au moins un premier système d'étanchéité et d'une gamme de composants permettant de modifier ce premier système d'étanchéité pour former un deuxième système d'étanchéité en reprenant des composants du premier système d'étanchéité, les deux systèmes d'étanchéité étant destinés à un même porte-outil de machine d'usinage assisté par un fluide de coupe, adaptés à des diamètres d'outils ou d'adaptateurs différents D1 et D2, et à des diamètres de bagues adaptatrices ou de manchons adaptateurs différents D3 et D4 montés sur les outils ou adaptateurs, avec D2 supérieur à D1 et D4 supérieur à D3, chaque système d'étanchéité comportant au moins un premier joint d'étanchéité contribuant à délimiter un espace de circulation du fluide vers au moins un canal interne de l'outil, le joint s'interposant entre des surfaces animées d'un mouvement de rotation relatif, lors de la rotation de l'outil, le premier joint du premier système d'étanchéité étant destiné à s'appliquer sur la bague adaptatrice ou le manchon adaptateur de diamètre D3 et le premier joint du deuxième système d'étanchéité étant destiné à s'appliquer sur la bague adaptatrice ou le manchon adaptateur de diamètre D4, chaque système d'étanchéité comportant également un deuxième joint d'étanchéité contribuant également à délimiter l'espace de circulation du fluide, le deuxième joint du premier système d'étanchéité étant destiné à coopérer avec l'outil ou l'adaptateur de diamètre D1, le deuxième joint du premier système d'étanchéité étant de diamètre intérieur inférieur au diamètre intérieur du deuxième joint du deuxième système d'étanchéité, destiné à coopérer avec l'outil ou l'adaptateur de diamètre D2.

L'invention a encore pour objet un procédé d'usinage, comportant les étapes consistant à :
- sélectionner un outil parmi plusieurs outils ayant des diamètres différents,
- sélectionner en fonction de l'outil choisi un système d'étanchéité selon l'invention ou les composants permettant de modifier le système d'étanchéité pour l'adapter au diamètre de l'outil ou de son adaptateur éventuel, ce système d'étanchéité étant choisi parmi au moins deux systèmes d'étanchéité adaptés à des outils de diamètres différents ou les composants étant choisis parmi des gammes de composants adaptés à des diamètres d'outils différents,
- mettre en place l'outil et le système d'étanchéité adapté ou les composants permettant de modifier le système d'étanchéité en place pour l'adapter au diamètre de l'outil ou de l'adaptateur éventuel,
- procéder à l'usinage avec l'outil et le système d'étanchéité ainsi mis en place.

Le choix des composants peut se limiter, outre le choix d'un moyen de serrage adapté tel qu'une pince expansible, au choix d'une bague porte-joints (avec les joints) adaptée au diamètre de l'outil ou de l'adaptateur portant l'outil, notamment quand les deux joints viennent chacun en contact avec l'outil ou avec un adaptateur sur lequel est fixé l'outil, ou au choix d'une bague porte-joints (avec les joints) et d'une bague adaptatrice ou d'un manchon adaptateur, lorsque l'un seulement des joints s'applique directement sur l'outil et l'autre sur la bague adaptatrice ou le manchon adaptateur.

L'invention pourra être mieux comprise à la lecture de la description détaillée qui va suivre, d'exemples de mise en œuvre non limitatifs de celle-ci, et à l'examen du dessin annexé, sur lequel :
- la figure 1 est un schéma simplifié d'une variante de l'invention, donnée à titre d'introduction,
- les figures 2A, 3A, 4A sont des vues de face de porte-outils selon l'invention, avec des outils et systèmes d'étanchéité adaptés,
- les figures 2B, 3B, 4B sont des coupes longitudinales, respectivement selon IIB-IIB, IIIB-IIIB, ... , VIB-VIB des figures 2A, 3A, 4A et
- les figures 2C, 3C, 4C sont des vues de côté des porte-outils des figures 2A, 3A, 4A, respectivement, et
- les figures 5A, 5B, 5C, 6A, 6B, 6C, 7 et 8 sont des variantes de systèmes qui ne correspondent pas à l'invention.

Sur les figures, l'outil a été représenté schématiquement. L'invention n'est pas limitée à un outil particulier, et celui-ci peut être autre qu'un foret.

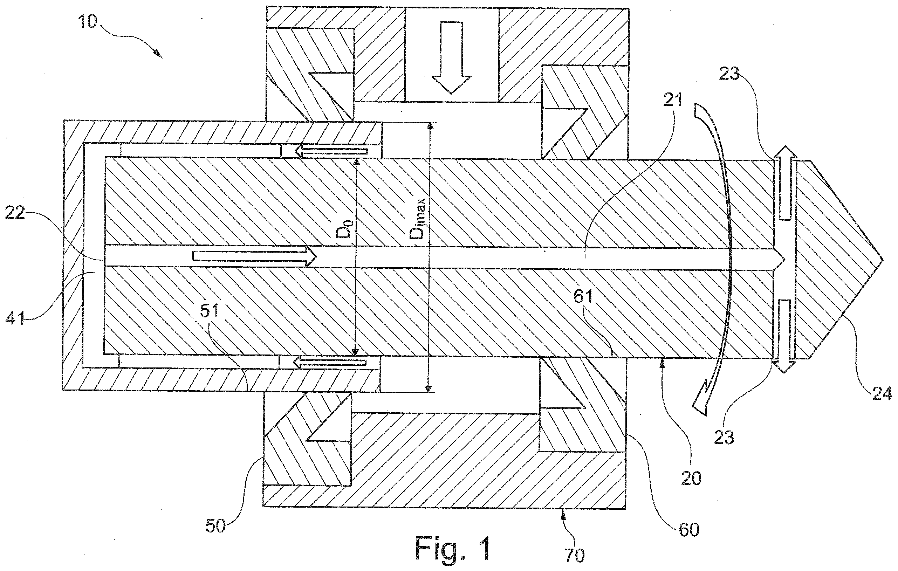

Sur la figure 1, on a représenté de façon simplifiée un porte-outil 10 réalisé conformément à l'invention, notamment conformément à la variante b) définie plus haut, où l'un des joints s'applique sur une surface du porte-outil et l'autre directement sur l'outil.

Le porte-outil 10 reçoit un outil 20, représenté schématiquement, comportant un canal interne 21 permettant d'acheminer le fluide depuis une entrée 22, située par exemple comme illustré à l'extrémité proximale (queue) de l'outil, vers une ou plusieurs sorties 23 situées à proximité d'une arête de coupe 24 de l'outil. Ce fluide est typiquement un lubrifiant.

L'outil est maintenu par le porte-outil de façon à permettre la transmission du couple et la circulation de fluide jusqu'à l'entrée 22 et comporte une structure qui définit un espace 41 de circulation. Ce dernier est délimité notamment par deux joints d'étanchéité 50 et 60 qui s'appliquent sur des surfaces respectives 51 et 61, formées respectivement sur la structure et sur l'outil 20.

Les joints 50 et 60 sont portés par un stator 70, représenté schématiquement.

La surface 51 sur laquelle s'applique le joint 50 est de diamètre Dⱼₘₐₓ et celle 61 de l'outil 20 sur laquelle s'applique le joint 60 est de diamètre Do.

Sur la figure 1, schématique, le ou les roulements de guidage éventuels n'ont pas été représentés.

Conformément à l'invention, Do et Dⱼₘₐₓ vérifient la relation 0,3 ≤ Do/Djₘₐₓ pour Do dans l'intervalle [1 ; 3] en mm ou 0,5 ≤ Do/Djₘₐₓ pour Do dans l'intervalle [3 ; 20] en mm, où Djₘₐₓ est le diamètre interne du plus grand des deux joints, à savoir celui référencé 50.

On réduit ainsi la vitesse de glissement et l'on peut tolérer une fréquence de rotation plus grande, notamment supérieure ou égale à 5 000 trs/min.

De préférence, le porte-outil est réalisé de façon à minimiser Dⱼₘₐₓ tout en laissant un passage suffisant pour le passage du fluide jusqu'à l'entrée 22 dans l'outil 20.

Ainsi, on peux avoir intérêt à réduire autant que possible l'épaisseur de la paroi définissant la surface 51, en fonction de la nature et du traitement du matériau la constituant, de la vitesse de glissement du joint, de la capacité à évacuer la chaleur générée par le frottement du joint et des sollicitations mécaniques appliquées au porte-outil.

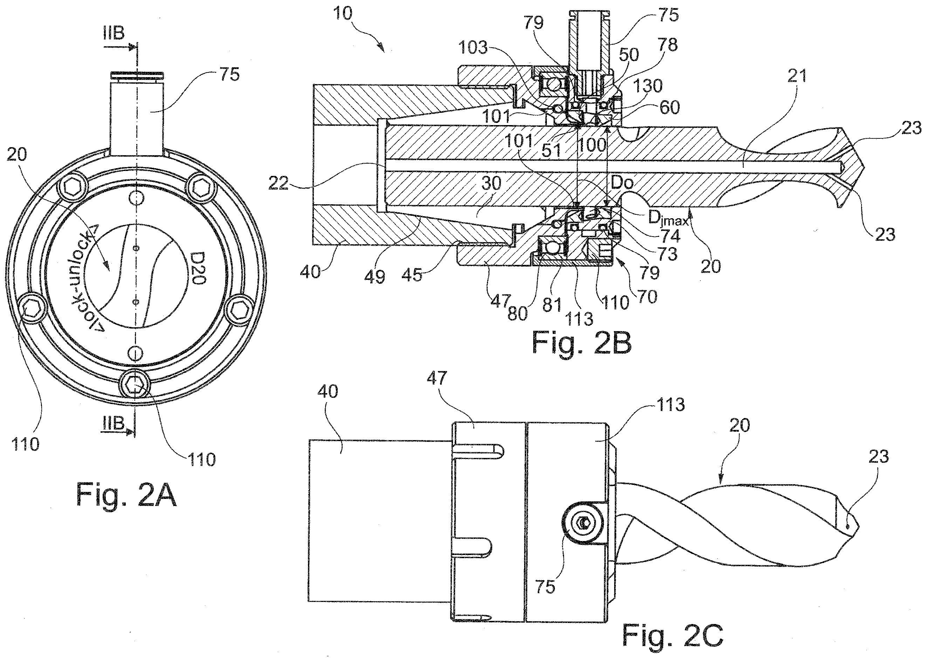

On a représenté aux figures 2A à 2C d'une part et 3A et 3C d'autre part deux exemples d'un porte-outil équipé de deux systèmes d'étanchéité adaptés à des diamètres d'outils respectifs différents, selon la variante b) qui correspond à l'invention.

Le porte-outil comporte un corps 40 pourvu d'un évidement conique 49 coopérant avec une pince 30 et un écrou 47 de serrage de la pince 30 est vissé sur un filetage 45 du corps 40.

Le corps 40 tourne avec l'outil 20 en guidant un roulement 80 dont l'une des bagues, référencée 81, la plus radialement externe, est fixe par rapport au stator 70.

Le porte-outil comporte une bague adaptatrice 101 ayant une paroi amincie 100 sur laquelle s'applique la surface de glissement 51 du joint 50.

Cette paroi 100 s'étend à une faible distance de la surface de l'outil 20, de façon à minimiser le diamètre interne du joint 50.

La bague adaptatrice 101 est assemblée à l'écrou de serrage 47 avec interposition d'un joint torique 103, pour assurer l'étanchéité de l'assemblage.

La bague adaptatrice 101 vient en contact avec l'extrémité de la pince 30, dans l'exemple considéré, ce qui assure son immobilisation complète dans le porte-outil.

Les joints 50 et 60 sont portés par une bague porte-joints 73, montée sur un corps 78 du stator 70, la bague 73 définissant avec les joints 50 et 60 une chambre 74 dans laquelle est injecté par des orifices 130 le fluide provenant d'un embout de raccordement 75.

La bague porte-joints 73 est maintenue sur le corps 78 du stator 70 avec interposition de joints toriques 79, pour assurer l'étanchéité de l'assemblage.

Des vis sans tête 110 assurent le maintien du roulement 80, en coopérant avec une bague extérieure 113 montée sur le corps 78 du stator 70.

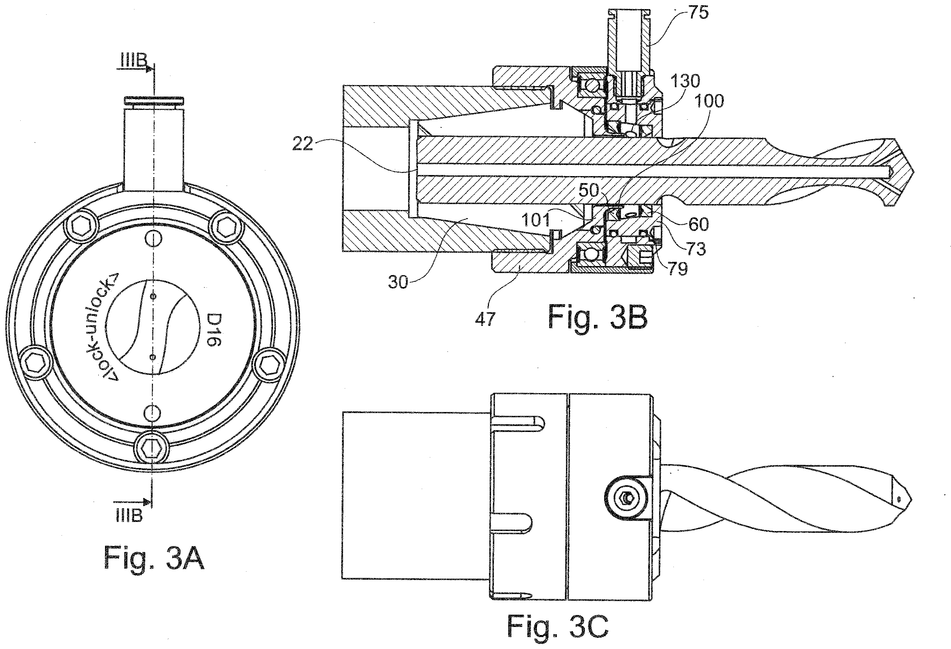

Dans l'exemple illustré aux figures 3A à 3C, l'outil 20 est de diamètre plus petit que dans l'exemple des figures 2A à 2C, par exemple 16 mm au lieu de 20 mm.

La pince 30 est différente, étant adaptée au nouveau diamètre d'outil 20.

Le corps 40 est inchangé, de même que l'écrou de serrage 47. La bague adaptatrice 101 est remplacée par une nouvelle bague de diamètre intérieur plus petit pour compenser la diminution du diamètre de l'outil 20. Le remplacement de la bague adaptatrice 101 permet de maintenir entre la paroi amincie 100 et la surface de l'outil 20 le jeu le plus faible possible, convenant à la circulation du fluide.

Dans l'exemple des figures 3A à 3C, la bague porte-joints 73 est également remplacée par une bague adaptée aux joints qu'elle doit maintenir et présente des alésages de diamètres différents.

Les autres pièces du porte-outil sont inchangées. Ainsi, l'utilisateur peut disposer de plusieurs composants adaptés à différents diamètres d'outil, tels qu'une gamme de bagues porte-joints 73 (avec leurs joints) et de bagues adaptatrices 101 adaptées à des diamètres d'outils spécifiques.

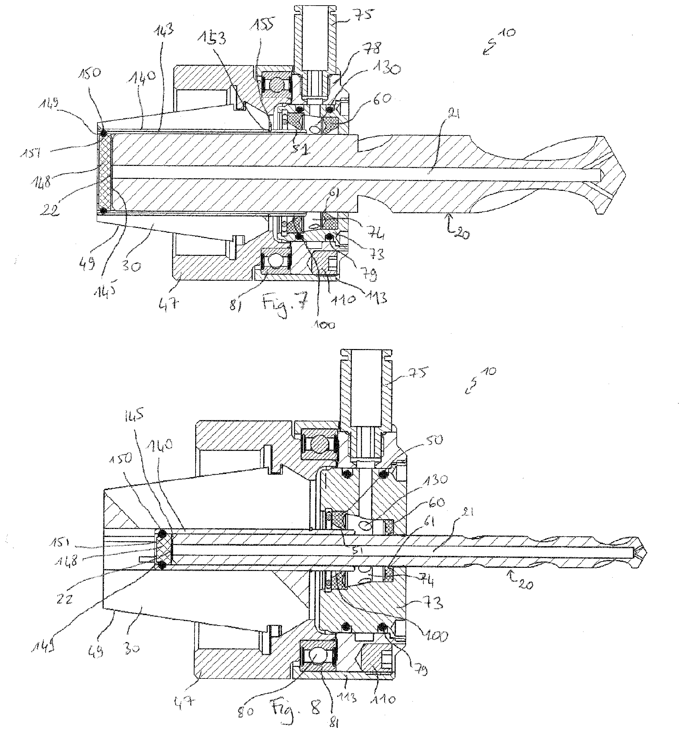

En variante, comme illustré sur les figures 7 et 8, le porte-outil comporte un manchon adaptateur 140 sur lequel s'applique le joint 50. Le manchon adaptateur 140 s'emmanche autour de l'outil 20 et il est disposé radialement entre la pince 30 et l'outil 20. Le manchon adaptateur 140 s'étend longitudinalement entre la chambre 74 dans laquelle est injecté le fluide par l'embout de raccordement 75 et l'extrémité interne du porte-outil. Le manchon adaptateur 140 est déformable et lors du serrage de la pince 30, il peut transmettre la force de serrage à l'outil 20 pour le maintenir en place. Lors du relâchement de la pince, le manchon adaptateur 140 se détend et libère l'outil 20. Le manchon adaptateur 140 comporte, comme illustré sur la figure 7, au moins une rainure longitudinale 143, mieux une pluralité de rainures longitudinales 143 s'étendant sur sa surface interne sur toute sa longueur.

Les rainures longitudinales 143 donnent, à une extrémité du manchon adaptateur 140, sur la chambre 74 et à l'autre extrémité du manchon adaptateur 140 sur un espace 145 communiquant avec l'entrée 22 du canal interne 21 de l'outil 20. Les rainures longitudinales 143 permettent la circulation du fluide de coupe de la chambre 74 au canal interne 21 de l'outil afin d'alimenter ce dernier.

L'extrémité interne du manchon adaptateur 140 comporte un bouchon 148 adapté au diamètre de l'outil 20 et porte un joint d'extrémité 150. Ce dernier est disposé entre le bouchon 148 et le manchon adaptateur 140 et permet de limiter les pertes de fluide de coupe.

De préférence, le joint d'extrémité 150 est positionné dans le manchon adaptateur 140 dans une gorge 151 du manchon adaptateur 140. Le bouchon 148 est introduit dans le manchon adaptateur 140 par son autre extrémité de manière à coulisser dans le manchon adaptateur 140 et à venir se plaquer contre le joint d'extrémité 150 pour assurer la fermeture étanche du manchon adaptateur 140. Le bouchon 148 comporte une gorge 151 destinée à recevoir le joint d'extrémité 150. Ce dernier peut s'encliqueter dans la gorge 151. Cette dernière a une section légèrement supérieure à un quart de cercle, notamment entre 90° et 120°. Du fait de l'ouverture de la gorge 151 dans la direction opposée à l'extrémité d'introduction du bouchon dans le manchon, un espace 149 plus important est ménagé derrière le joint 150 entre le bouchon 148 et la surface interne du manchon 140.

Le joint d'extrémité 150 retient le bouchon 148 contre la pression de fluide de coupe dans le manchon adaptateur, comprise entre 1 bar et 10 bar , mieux entre 1 bar et 7 bar.

Le manchon adaptateur 140 comporte une gorge annulaire 153 qui reçoit un anneau élastique (Circlips) 155 disposé entre la pince 30 et la bague porte-joints 73. L'anneau élastique 155 se positionne dans la gorge annulaire 153 et vient bloquer le manchon adaptateur 140 à une profondeur d'enfoncement prédéterminée.

Comme illustré sur les figures 7 et 8, le manchon adaptateur 140, le bouchon 148, le joint d'extrémité 150 et l'anneau élastique 155 sont adaptés au diamètre de l'outil 20.

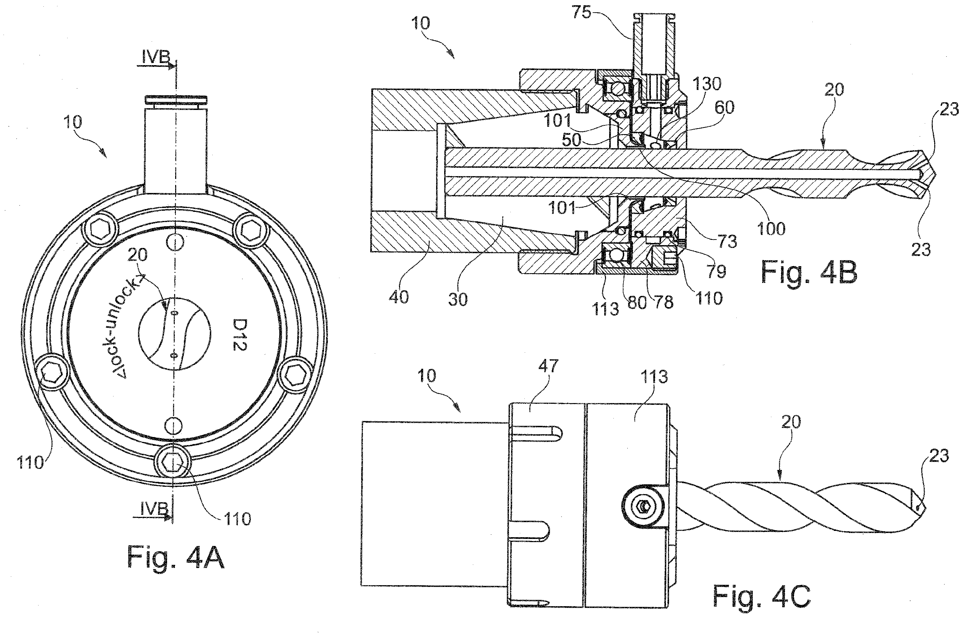

L'exemple des figures 4A à 4C est similaire à celui des figures 3A à 3C, pour un autre diamètre d'outil, plus petit encore, par exemple 12 mm.

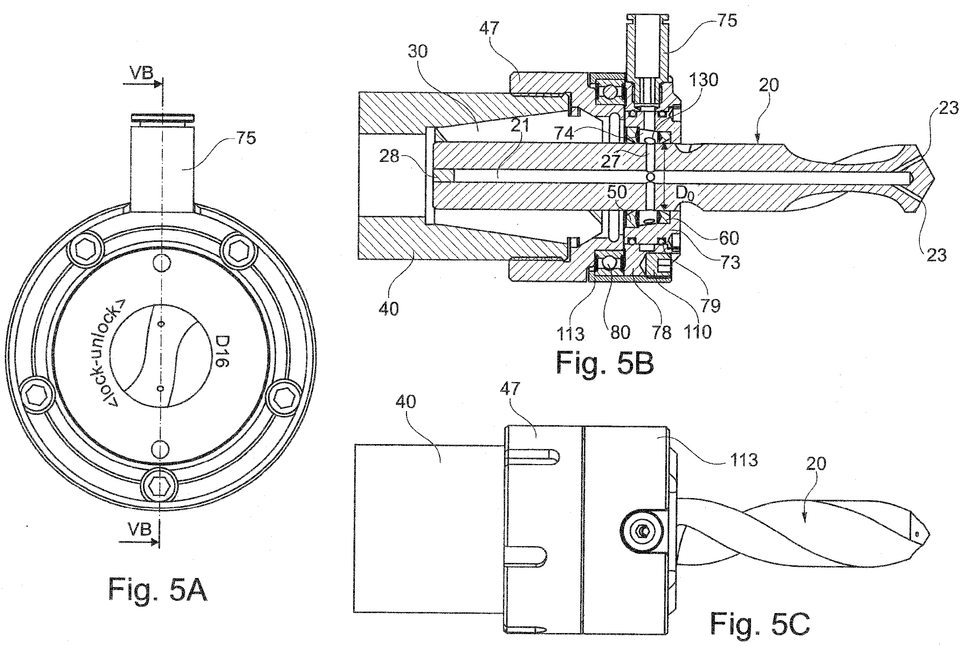

Dans l'exemple des figures 5A à 5C, les deux joints 50 et 60 s'appliquent directement sur l'outil 20, ce qui permet de minimiser les vitesses de glissement desdits joints.

En variante, ces joints s'appliquent sur un adaptateur sur lequel est fixé l'outil, comme décrit plus loin.

Dans l'exemple des figures 5A à 5C, pour assurer l'alimentation en fluide de l'outil 20, ce dernier est pourvu d'au moins un canal interne 27 débouchant dans l'espace de circulation du fluide 74, entre les joints 50 et 60.

Par exemple, comme illustré, l'outil 20 comporte plusieurs canaux radiaux 27 communiquant avec le canal interne longitudinal 21, lequel est obturé par un bouchon 28 à son extrémité proximale (queue de l'outil).

La bague adaptatrice 101 des exemples des figures 3A et 3B n'est plus nécessaire, puisque les joints s'appliquent directement sur l'outil 20 et que l'entrée du fluide ne se fait plus par son extrémité proximale.

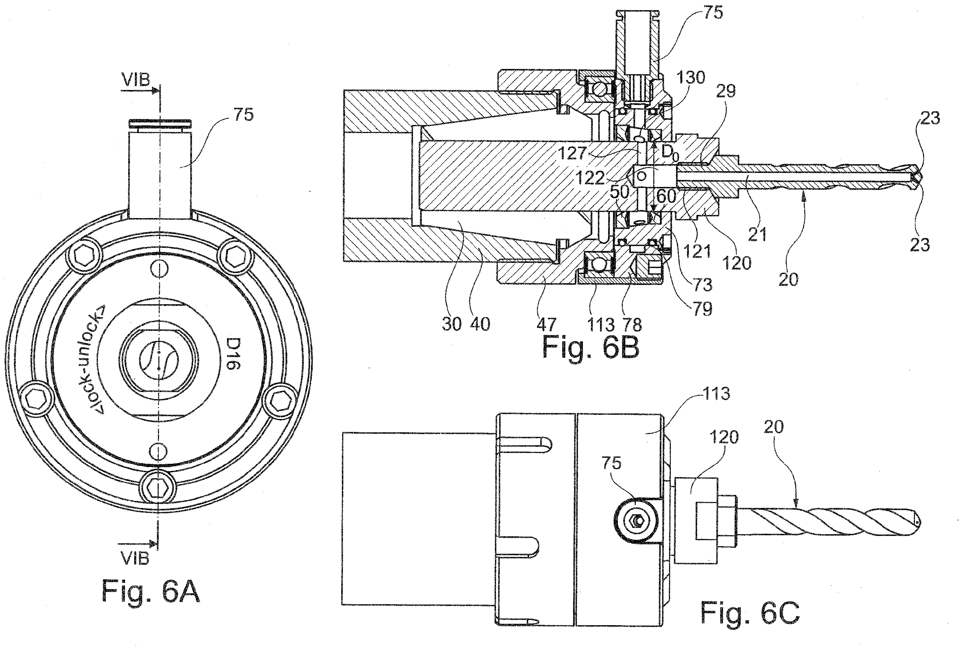

Dans la variante des figures 6A à 6C, l'outil 20 est porté par un adaptateur 120.

L'outil 20 présente par exemple, comme illustré, une queue 29 vissée dans un taraudage 121 de l'adaptateur.

Le canal 21 de l'outil de communique avec une chambre 122 dans laquelle débouchent des canaux radiaux 127 de l'adaptateur ayant la même fonction que les canaux 27 précédemment décrits. Les joints 50 et 60 s'appliquent sur l'adaptateur 120.

Bien entendu, l'invention n'est pas limitée aux exemples illustrés.

Il est notamment possible de modifier la forme du porte-outil et de réaliser d'autres assemblages permettant de rapprocher au mieux la surface de glissement des joints de la surface de l'outil.

D'autres moyens de serrage qu'une pince expansible peuvent être utilisés, par exemple une frette thermique, mécanique ou un serrage radial.

L'expression "comportant un" doit être comprise comme étant synonyme de "comportant au moins un" et « compris entre » s'entend bornes incluses.

## Revendications

1. Système d'étanchéité pour un porte-outil (10) de machine d'usinage axial ou de fraisage assisté par un fluide, comportant :
- au moins un premier (50) et un deuxième (60) joint contribuant à délimiter un espace (41) de circulation du fluide vers au moins un canal interne (21) de l'outil, l'un (60) des joints s'appliquant sur l'outil (20) ou un adaptateur éventuel portant l'outil et l'autre joint (50) s'appliquant sur une surface (100) définie par une paroi (100) du porte-outil espacée de l'outil et tournant avec celui-ci,
charactérisé par 0,3 ≤ Do/Djₘₐₓ pour Do dans l'intervalle [1 ; 3] en mm et 0,5 ≤ Do/Djₘₐₓ pour Do dans l'intervalle [3 ; 20] en mm, où Do est le diamètre de l'outil en regard de cet autre joint (50) et Djₘₐₓ le plus grand diamètre interne des deux joints (50, 60).

2. Système selon la revendication 1, comportant un écrou (47) de serrage d'une pince expansible (30) de maintien de l'outil ou de l'adaptateur, fixé sur un corps (40) du porte-outil.

3. Système selon la revendication 1 ou 2, l'un (60) des joints (50, 60) s'appliquant sur l'outil (20) ou l'adaptateur.

4. Système selon la revendication 1 ou 2, l'un des joints (60) s'appliquant sur l'outil (20) et l'autre (50) sur la surface (100).

5. Système selon la revendication 4, la surface (100) étant définie par une bague adaptatrice (101), et de préférence, notamment dans le cas du rattachement de la revendication 5 à la revendication 2, venant au contact de la pince (30) expansible.

6. Système selon l'une quelconque des revendications 1 à 5, les joints (50, 60) étant portés par une bague (73) adaptée au diamètre de l'outil ou de l'adaptateur, de préférence disposée au contact d'un corps (78) de stator servant au raccordement d'une arrivée en fluide, notamment en liaison pivot avec l'écrou (47) par le biais d'un roulement (80), dans le cas du rattachement de la revendication 6 à la revendication 2.

7. Système selon l'une quelconque des revendications 1 à 4, la surface (100) étant définie par un manchon adaptateur (140) déformable, de préférence élastiquement déformable et métallique, disposé, notamment dans le cas du rattachement de la revendication 7 à la revendication 2, entre l'outil (20) et la pince (30) expansible.

8. Système selon la revendication 7, le manchon adaptateur (140) comportant au moins une rainure longitudinale (143), mieux une pluralité de rainures longitudinales (143) s'étendant sur sa surface interne et sur toute la longueur.

9. Système selon la revendication 7 ou 8, comportant un joint torique (150) disposé entre un bouchon (148) et le manchon adaptateur (140), le bouchon (148) étant maintenu contre le joint (150) par la pression du fluide de coupe présente dans le manchon adaptateur (140).

10. Système selon l'une quelconque des revendications précédentes, l'usinage axial ou de fraisage étant un usinage de perçage ou de fraisurage.

11. Gamme d'au moins un premier et un deuxième système d'étanchéité, selon l'une des revendications 1 à 10, ou un ensemble d'au moins un premier système d'étanchéité, selon l'une des revendications 1 à 10, et d'une gamme de composants permettant de modifier ce premier système d'étanchéité pour former un deuxième système d'étanchéité en reprenant des composants du premier système d'étanchéité, les deux systèmes d'étanchéité étant destinés à un même porte-outil de machine d'usinage assisté par un fluide de coupe, adaptés à des diamètres d'outils ou d'adaptateurs différents D1 et D2, avec D2 supérieur à D1, chaque système d'étanchéité comportant au moins un premier joint d'étanchéité (50) contribuant à délimiter un espace de circulation du fluide vers au moins un canal interne (21) de l'outil, le joint (50) s'interposant entre des surfaces animées d'un mouvement de rotation relatif, lors de la rotation de l'outil, le diamètre intérieur du premier joint (50) du premier système d'étanchéité étant destiné à coopérer avec l'outil ou l'adaptateur de diamètre D1 et le diamètre intérieur du premier joint (50) du deuxième système d'étanchéité étant destiné à coopérer avec l'outil ou l'adaptateur de diamètre D2,
chaque système d'étanchéité comportant également un deuxième joint d'étanchéité (60) contribuant également à délimiter l'espace de circulation du fluide, le deuxième joint (60) du premier système d'étanchéité étant destiné à coopérer avec l'outil ou l'adaptateur de diamètre D1, le deuxième joint du premier système d'étanchéité étant de diamètre intérieur inférieur au diamètre intérieur du deuxième joint (60) du deuxième système d'étanchéité, destiné à coopérer avec l'outil ou l'adaptateur de diamètre D2.

12. Gamme d'au moins un premier et un deuxième système d'étanchéité, selon l'une quelconque des revendications 7 à 9, ou un ensemble d'au moins un premier système d'étanchéité, selon l'une quelconque des revendications 7 à 9, et d'une gamme de composants permettant de modifier ce premier système d'étanchéité pour former un deuxième système d'étanchéité en reprenant les composants du premier système d'étanchéité, les deux systèmes d'étanchéité étant destinés à un même porte-outil de machine d'usinage assisté par un fluide de coupe, adaptés à des diamètres d'outils ou d'adaptateurs différents D1 et D2, et à des diamètres de bagues adaptatrices (101) ou de manchons adaptateurs (140) différents D3 et D4 montés sur les outils ou adaptateurs, avec D2 supérieur à D1 et D4 supérieur à D3, chaque système d'étanchéité comportant au moins un premier joint d'étanchéité (50) contribuant à délimiter un espace de circulation du fluide vers au moins un canal interne (21) de l'outil, le joint (50) s'interposant entre des surfaces animées d'un mouvement de rotation relatif, lors de la rotation de l'outil, le premier joint (50) du premier système d'étanchéité étant destiné à s'appliquer sur la bague adaptatrice (101) ou le manchon adaptateur (140) de diamètre D3 et le premier joint (50) du deuxième système d'étanchéité étant destiné à s'appliquer sur la bague adaptatrice (101) ou le manchon adaptateur (140) de diamètre D4,
chaque système d'étanchéité comportant également un deuxième joint d'étanchéité (60) contribuant également à délimiter l'espace de circulation du fluide, le deuxième joint (60) du premier système d'étanchéité étant destiné à coopérer avec l'outil ou l'adaptateur de diamètre D1, le deuxième joint du premier système d'étanchéité étant de diamètre intérieur inférieur au diamètre intérieur du deuxième joint (60) du deuxième système d'étanchéité, destiné à coopérer avec l'outil ou l'adaptateur de diamètre D2.

13. Procédé d'usinage, comportant les étapes consistant à :
- sélectionner un outil parmi plusieurs outils ayant des diamètres différents,
- sélectionner en fonction de l'outil choisi un système d'étanchéité selon l'une quelconque des revendications 1 à 10 ou les composants (50, 60, 73 ; 50, 60, 73, 101 ; 140) permettant de modifier le système d'étanchéité pour l'adapter au diamètre de l'outil ou de son adaptateur éventuel, ce système d'étanchéité étant choisi parmi au moins deux systèmes d'étanchéité adaptés à des outils de diamètres différents ou les composants étant choisis parmi des gammes de composants (50, 60, 73 ; 101 ; 140) adaptés à des diamètres d'outils différents,
- mettre en place l'outil et le système d'étanchéité adapté ou les composants permettant de modifier le système d'étanchéité en place pour l'adapter au diamètre de l'outil ou de l'adaptateur éventuel,
- procéder à l'usinage avec l'outil et le système d'étanchéité ainsi mis en place.

14. Procédé selon la revendication 13, le choix des composants se limitant, outre le choix d'un moyen de serrage adapté tel qu'une pince expansible (30), au choix d'une bague porte-joints (73) avec les joints (50, 60), adaptée au diamètre de l'outil ou de l'adaptateur portant l'outil, notamment quand les deux joints viennent chacun en contact avec l'outil ou avec un adaptateur sur lequel est fixé l'outil, ou au choix d'une bague porte-joints (73) avec les joints (50, 60) et d'une bague adaptatrice (101), lorsque l'un seulement des joints s'applique directement sur l'outil et l'autre sur la bague adaptatrice (101).

15. Procédé selon la revendication 13, le choix des composants comportant celui d'un manchon adaptateur (140) adapté au diamètre de l'outil sur lequel s'applique le premier joint d'étanchéité (50).

## Patentansprüche

1. Dichtungssystem für einen Werkzeughalter (10) einer Maschine zur fluidunterstützten axialen oder Fräsbearbeitung, welches umfasst:
- wenigstens eine erste (50) und eine zweite (60) Dichtung, die dazu beitragen, einen Raum (41) zur Zirkulation des Fluids in Richtung wenigstens eines inneren Kanals (21) des Werkzeugs zu begrenzen, wobei eine (60) der Dichtungen am Werkzeug (20) oder einem eventuellen Adapter, der das Werkzeug trägt, anliegt und die andere Dichtung (50) an einer Fläche (100) anliegt, die durch eine Wand (100) des Werkzeughalters definiert ist, die vom Werkzeug beabstandet ist und zusammen mit diesem rotiert,
**dadurch gekennzeichnet, dass** 0,3 ≤ Do/Djₘₐₓ für Do im Intervall [1; 3], in mm, und 0,5 ≤ Do/Djₘₐₓ für Do im Intervall [3; 20], in mm, wobei Do der Durchmesser des Werkzeugs gegenüber dieser anderen Dichtung (50) und Djₘₐₓ der größere Innendurchmesser der zwei Dichtungen (50, 60) ist.

2. System nach Anspruch 1, welches eine Mutter (47) zum Spannen einer spreizbaren Spannzange (30) zum Halten des Werkzeugs oder des Adapters umfasst, die an einem Körper (40) des Werkzeughalters befestigt ist.

3. System nach Anspruch 1 oder 2, wobei eine (60) der Dichtungen (50, 60) am Werkzeug (20) oder am Adapter anliegt.

4. System nach Anspruch 1 oder 2, wobei eine der Dichtungen (60) am Werkzeug (20) und die andere (50) an der Fläche (100) anliegt.

5. System nach Anspruch 4, wobei die Fläche (100) durch einen Adapterring (101) definiert ist und vorzugsweise, insbesondere falls Anspruch 5 von Anspruch 2 abhängig ist, mit der spreizbaren Spannzange (30) in Kontakt kommt.

6. System nach einem der Ansprüche 1 bis 5, wobei die Dichtungen (50, 60) von einem an den Durchmesser des Werkzeugs oder des Adapters angepassten Ring (73) getragen werden, der vorzugsweise in Kontakt mit einem Körper (78) eines Stators angeordnet ist, der zum Anschluss einer Fluidzuführung dient, insbesondere in Schwenkverbindung mit der Mutter (47) über ein Wälzlager (80), falls Anspruch 6 von Anspruch 2 abhängig ist.

7. System nach einem der Ansprüche 1 bis 4, wobei die Fläche (100) durch eine verformbare Adapterhülse (140), die vorzugsweise elastisch verformbar und metallisch ist, definiert ist und, insbesondere falls Anspruch 7 von Anspruch 2 abhängig ist, zwischen dem Werkzeug (20) und der spreizbaren Spannzange (30) angeordnet ist.

8. System nach Anspruch 7, wobei die Adapterhülse (140) wenigstens eine Längsnut (143) aufweist, besser mehrere Längsnuten (143), die sich auf der Innenfläche und auf der gesamten Länge erstrecken.

9. System nach Anspruch 7 oder 8, welches einen O-Ring (150) umfasst, der zwischen einem Stopfen (148) und der Adapterhülse (140) angeordnet ist, wobei der Stopfen (148) durch den Druck des Schneidfluids, das in der Adapterhülse (140) vorhanden ist, an der Dichtung (150) anliegend gehalten wird.

10. System nach einem der vorhergehenden Ansprüche, wobei die axiale oder Fräsbearbeitung eine Bohr- oder Senkbearbeitung ist.

11. Reihe aus wenigstens einem ersten und einem zweiten Dichtungssystem nach einem der Ansprüche 1 bis 10 oder Gesamtheit aus wenigstens einem ersten Dichtungssystem nach einem der Ansprüche 1 bis 10 und einer Reihe von Komponenten, die es ermöglichen, dieses erste Dichtungssystem zu modifizieren, um unter erneuter Verwendung der Komponenten des ersten Dichtungssystems ein zweites Dichtungssystem zu bilden, wobei die zwei Dichtungssysteme für ein und denselben Werkzeughalter einer Maschine zur durch ein Schneidfluid unterstützten Bearbeitung bestimmt sind und an unterschiedliche Durchmesser von Werkzeugen oder Adaptern D1 und D2 angepasst sind, wobei D2 größer als D1 ist, wobei jedes Dichtungssystem wenigstens eine erste Dichtung (50) umfasst, die dazu beiträgt, einen Raum zur Zirkulation von Fluid in Richtung wenigstens eines inneren Kanals (21) des Werkzeugs zu begrenzen, wobei die Dichtung (50) zwischen Flächen angeordnet ist, die bei der Rotation des Werkzeugs in eine Rotationsbewegung relativ zueinander versetzt werden, wobei der Innendurchmesser der ersten Dichtung (50) des ersten Dichtungssystems dazu bestimmt ist, mit dem Werkzeug oder dem Adapter mit Durchmesser D1 zusammenzuwirken, und der Innendurchmesser der ersten Dichtung (50) des zweiten Dichtungssystems dazu bestimmt ist, mit dem Werkzeug oder dem Adapter mit Durchmesser D2 zusammenzuwirken,
wobei jedes Dichtungssystem außerdem eine zweite Dichtung (60) umfasst, die ebenfalls dazu beiträgt, den Raum zur Zirkulation des Fluids zu begrenzen, wobei die zweite Dichtung (60) des ersten Dichtungssystems dazu bestimmt ist, mit dem Werkzeug oder dem Adapter mit Durchmesser D1 zusammenzuwirken, wobei die zweite Dichtung des ersten Dichtungssystems einen Innendurchmesser aufweist, der kleiner als der Innendurchmesser der zweiten Dichtung (60) des zweiten Dichtungssystems ist, die dazu bestimmt ist, mit dem Werkzeug oder dem Adapter mit Durchmesser D2 zusammenzuwirken.

12. Reihe aus wenigstens einem ersten und einem zweiten Dichtungssystem nach einem der Ansprüche 7 bis 9 oder Gesamtheit aus wenigstens einem ersten Dichtungssystem nach einem der Ansprüche 7 bis 9 und einer Reihe von Komponenten, die es ermöglichen, dieses erste Dichtungssystem zu modifizieren, um unter erneuter Verwendung der Komponenten des ersten Dichtungssystems ein zweites Dichtungssystem zu bilden, wobei die zwei Dichtungssysteme für ein und denselben Werkzeughalter einer Maschine zur durch ein Schneidfluid unterstützten Bearbeitung bestimmt sind und an unterschiedliche Durchmesser von Werkzeugen oder Adaptern D1 und D2 und an unterschiedliche Durchmesser D3 und D4 von Adapterringen (101) oder Adapterhülsen (140), die an den Werkzeugen oder Adaptern angebracht sind, angepasst sind, wobei D2 größer als D1 und D4 größer als D3 ist, wobei jedes Dichtungssystem wenigstens eine erste Dichtung (50) umfasst, die dazu beiträgt, einen Raum zur Zirkulation von Fluid in Richtung wenigstens eines inneren Kanals (21) des Werkzeugs zu begrenzen, wobei die Dichtung (50) zwischen Flächen angeordnet ist, die bei der Rotation des Werkzeugs in eine Rotationsbewegung relativ zueinander versetzt werden, wobei die erste Dichtung (50) des ersten Dichtungssystems dazu bestimmt ist, an dem Adapterring (101) oder der Adapterhülse (140) mit Durchmesser D3 zur Anlage zu kommen, und die erste Dichtung (50) des zweiten Dichtungssystems dazu bestimmt ist, an dem Adapterring (101) oder der Adapterhülse (140) mit Durchmesser D4 zur Anlage zu kommen,
wobei jedes Dichtungssystem außerdem eine zweite Dichtung (60) umfasst, die ebenfalls dazu beiträgt, den Raum zur Zirkulation des Fluids zu begrenzen, wobei die zweite Dichtung (60) des ersten Dichtungssystems dazu bestimmt ist, mit dem Werkzeug oder dem Adapter mit Durchmesser D1 zusammenzuwirken, wobei die zweite Dichtung des ersten Dichtungssystems einen Innendurchmesser aufweist, der kleiner als der Innendurchmesser der zweiten Dichtung (60) des zweiten Dichtungssystems ist, die dazu bestimmt ist, mit dem Werkzeug oder dem Adapter mit Durchmesser D2 zusammenzuwirken.

13. Bearbeitungsverfahren, welches die folgenden Schritte umfasst:
- Auswählen eines Werkzeugs aus mehreren Werkzeugen mit unterschiedlichen Durchmessern,
- Auswählen, in Abhängigkeit von dem gewählten Werkzeug, eines Dichtungssystems nach einem der Ansprüche 1 bis 10 oder der Komponenten (50, 60, 73; 50, 60, 73, 101; 140), die es ermöglichen, das Dichtungssystem zu modifizieren, um es an den Durchmesser des Werkzeugs oder seines eventuellen Adapters anzupassen, wobei dieses Dichtungssystem aus wenigstens zwei Dichtungssystemen gewählt wird, die an Werkzeuge mit unterschiedlichen Durchmessern angepasst sind, oder wobei die Komponenten aus Reihen von Komponenten (50, 60, 73; 101; 140) gewählt werden, die an unterschiedliche Durchmesser von Werkzeugen angepasst sind,
- Anbringen des Werkzeugs und des angepassten Dichtungssystems oder der Komponenten, die es ermöglichen, das angebrachte Dichtungssystem zu modifizieren, um es an den Durchmesser des Werkzeugs oder des eventuellen Adapters anzupassen,
- Durchführen der Bearbeitung mit dem Werkzeug und dem Dichtungssystem, die somit angebracht wurden.

14. Verfahren nach Anspruch 13, wobei die Wahl der Komponenten, außer auf die Wahl eines angepassten Spannmittels wie etwa einer spreizbaren Spannzange (30), auf die Wahl eines Dichtungen tragenden Ringes (73) mit den Dichtungen (50, 60) begrenzt ist, der an den Durchmesser des Werkzeugs oder des Adapters, der das Werkzeug trägt, angepasst ist, insbesondere wenn die zwei Dichtungen jeweils mit dem Werkzeug oder mit einem Adapter, an welchem das Werkzeug befestigt ist, in Kontakt kommen, oder auf die Wahl eines Dichtungen tragenden Ringes (73) mit den Dichtungen (50, 60) und eines Adapterringes (101), wenn nur eine der Dichtungen direkt am Werkzeug und die andere an dem Adapterring (101) zur Anlage kommt.

15. Verfahren nach Anspruch 13, wobei die Wahl der Komponenten die Wahl einer Adapterhülse (140) umfasst, die an den Durchmesser des Werkzeugs angepasst ist, an welchem die erste Dichtung (50) zur Anlage kommt.

## Claims

1. Sealing system for a tool holder (10) of a fluid-assisted milling or axial machining machine tool, comprising:
- at least a first (50) and a second (60) seal contributing to delimiting a space (41) for the circulation of the fluid toward at least one internal passage (21) of the tool, one (60) of the seals pressing against the tool (20) or a tool-bearing adapter there may be, and the other seal (50) pressing against a surface (100) defined by a wall (100) of the tool holder spaced away from the tool and rotating with the latter,
**characterized by** 0.3 ≤ Do/Djₘₐₓ for Do in the range [1; 3] in mm and 0.5 ≤ Do/Djₘₐₓ for Do in the range [3; 20] in mm, where Do is the diameter of the tool facing this other seal (50) and Djₘₐₓ is the largest internal diameter of the two seals (50, 60).

2. System according to Claim 1, comprising a collet nut (47) for tightening an expanding collet (30) that holds the tool or the adapter, fixed to a body (40) of the tool holder.

3. System according to Claim 1 or 2, one (60) of the seals (50, 60) pressing against the tool (20) or the adapter.

4. System according to Claim 1 or 2, one of the seals (60) pressing against the tool (20) and the other (50) against the surface (100).

5. System according to Claim 4, the surface (100) being defined by an adapter ring (101) and, for preference, notably in the case in which Claim 5 is attached to Claim 2, coming into contact with the expanding collet (30).

6. System according to any one of Claims 1 to 5, the seals (50, 60) being borne by a ring (73) adapted to the diameter of the tool or of the adapter, preferably arranged in contact with a stator body (78) used for coupling a fluid inlet, notably in a pivoting connection with the nut (47) via a rolling bearing (80), in the case in which Claim 6 is attached to Claim 2.

7. System according to any one of Claims 1 to 4, the surface (100) being defined by a deformable, preferably elastically deformable and metallic, adapter sleeve (140) arranged, notably in the case in which Claim 7 is attached to Claim 2, between the tool (20) and the expanding collet (30).

8. System according to Claim 7, the adapter sleeve (140) comprising at least one longitudinal groove (143), or better, a plurality of longitudinal grooves (143) extending over its internal surface and over the entire length.

9. System according to Claim 7 or 8, comprising an O-ring seal (150) positioned between a plug (148) and the adapter sleeve (140), the plug (148) being held against the seal (150) by the pressure of the cutting fluid present in the adapter sleeve (140).

10. System according to any one of the preceding claims, the axial or milling machining operation being a machining operation of drilling or of countersinking.

11. Range of at least a first and a second sealing system according to one of Claims 1 to 10, or a set of at least a first sealing system according to one of Claims 1 to 10 and a range of components that allow this first sealing system to be modified to form a second sealing system by reusing components of the first sealing system, the two sealing systems being intended for one and the same tool holder of a cutting fluid-assisted machine tool, adapted to different diameters D1 and D2 of tools or adapters, where D2 is greater than D1, each sealing system comprising at least a first seal (50) contributing to delimiting a space for the circulation of the fluid toward at least one internal passage (21) of the tool, the seal (50) being interposed between surfaces to which a relative rotational movement is imparted, as the tool rotates, the inside diameter of the first seal (50) of the first sealing system being intended to collaborate with the tool or adapter of diameter D1, and the inside diameter of the first seal (50) of the second sealing system being intended to collaborate with the tool or adapter of diameter D2,
each sealing system also comprising a second seal (60) likewise contributing to delimiting the space for the circulation of the fluid, the second seal (60) of the first sealing system being intended to collaborate with the tool or adapter of diameter D1, the second seal of the first sealing system being of an inside diameter less than the inside diameter of the second seal (60) of the second sealing system, intended to collaborate with the tool or adapter of diameter D2.

12. Range of at least a first and a second sealing system according to one of Claims 7 to 9, or a set of at least a first sealing system according to one of Claims 7 to 9 and a range of components that allow this first sealing system to be modified to form a second sealing system by reusing components of the first sealing system, the two sealing systems being intended for one and the same tool holder of a cutting fluid-assisted machine tool, adapted to different diameters D1 and D2 of tools or adapters, and to different diameters D3 and D4 of adapter rings (101) or adapter sleeves (140) mounted on the tools or adapters, where D2 is greater than D1, and D4 greater than D3 each sealing system comprising at least a first seal (50) contributing to delimiting a space for the circulation of the fluid toward at least one internal passage (21) of the tool, the seal (50) being interposed between surfaces to which a relative rotational movement is imparted, as the tool rotates, the first seal (50) of the first sealing system being intended to press against the adapter ring (101) or the adapter sleeve (140) of diameter D3, and the first seal (50) of the second sealing system being intended to press against the adapter ring (101) or the adapter sleeve (140) of diameter D4,
each sealing system also comprising a second seal (60) likewise contributing to delimiting the space for the circulation of the fluid, the second seal (60) of the first sealing system being intended to collaborate with the tool or adapter of diameter D1, the second seal of the first sealing system being of an inside diameter less than the inside diameter of the second seal (60) of the second sealing system, intended to collaborate with the tool or adapter of diameter D2.

13. Machining method, comprising the steps involving:
- selecting a tool from a number of tools of different diameters,
- depending on the tool chosen, selecting a sealing system according to any one of Claims 1 to 10 or the components (50, 60, 73; 50, 60, 73, 101; 140) that allow the sealing system to be modified to adapt it to the diameter of the tool or of an adapter thereof there may be, this sealing system being chosen from at least two sealing systems adapted to tools of different diameters or the components being chosen from ranges of components (50, 60, 73; 101; 140) adapted to different diameters of tools,
- fitting the tool and the adapted sealing system or the components allowing the sealing system in place to be modified to adapt it to the diameter of the tool or of the adapter there may be,
- proceeding to machine using the tool and the sealing system thus fitted.

14. Method according to Claim 13, the choice of components being restricted, aside from the choice of an adapted clamping means such as an expanding collet (30), to the choice of a seal-bearing ring (73), with the seals (50, 60), that is adapted to the diameter of the tool or of the adapter bearing the tool, notably when the two seals each come into contact with the tool or with an adapter to which the tool is fixed, or to the choice of a seal-bearing ring (73), with the seals (50, 60), and of an adapter ring (101), when just one of the seals presses directly against the tool and the other presses against the adapter ring (101) .

15. Method according to Claim 13, the choice of components comprising that of an adapter sleeve (140) adapted to the diameter of the tool against which the first seal (50) presses.
